# EUROPÄISCHE PATENTANMELDUNG

(11) **EP 1 953 615 A1**
(43) Veröffentlichungstag der Anmeldung: **06.08.2008**
(21) Anmeldenummer: 08400001.7
(22) Anmeldetag: 24.01.2008
(51) Int. Cl.: G05B 19/402, G05B 19/404

(54) **Vorrichtung und Verfahren zur Korrektur eines Positionierungssystems**

(30) Priorität: 26.01.2007 DE 102007004971
(71) Anmelder: AfM Technology GmbH, 73430 Aalen (DE)
(72) Erfinder: Banzhaf, Klaus, 89547 Gerstetten (DE); Hageney, Theo, 73432 Aalen (DE); Meyer, Wolfram, 90518 Altdorf (DE); Bullinger, Alexander, 73432 Aalen (DE); Gall, Christoph, 73457 Essingen (DE)
(74) Vertreter: Reiners, Thomas

(57) **Zusammenfassung**

Die Erfindung betrifft eine Vorrichtung zur Korrektur eines Positionierungssystems (1), das eine Systemsteuereinheit (10) und einen Programmspeicher (40) umfasst, in dem mindestens ein Programm (72) für mindestens eine Positionierungsfunktion speicherbar ist, wobei die Systemsteuereinheit (10) über eine Auswerte- und Steuereinheit (12) das mindestens eine gespeicherte Programm (72) zur Abarbeitung in einen Arbeitsspeicher (16) lädt, und ein korrespondierendes Verfahren. Erfindungsgemäß ist eine Konvertiervorrichtung (50) vorhanden, die ein für mindestens eine Positionierungsfunktion erstelltes Programm (72) durch Einarbeiten von Korrekturwerten (62) in einen Steuercode des Programms (72) modifiziert und als systemspezifisches Programm (52) einem vorgegebenen Positionierungssystem (1) zur Verfügung stellt, wobei die Korrekturwerte (62) speziell für das vorgegebene Positionierungssystem (1) ermittelt sind.

## Beschreibung

Die Erfindung betrifft eine Vorrichtung zur Korrektur eines Positionierungssystems nach dem Oberbegriff des Patentanspruchs 1 und ein korrespondierendes Verfahren.

Aus dem Stand der Technik sind Vorrichtungen und Verfahren zur Korrektur von Geometriefehlern bei Positionierungssystemen und/oder zur Genauigkeitssteigerung durch numerische Fehlerkorrektur bekannt.

So kommen zur Verbesserung der Bearbeitungsgenauigkeit von Werkzeugmaschinen oder zur Steigerung der Messgenauigkeit von Messgeräten unterschiedliche Verfahren zum Einsatz. Bei Werkzeugmaschinen wird das gefertigte Werkstück auf einem geeigneten Messgerät gemessen. Die dabei festgestellten Abweichungen gegenüber Soll-Daten dienen zur Korrektur der Steuerdaten für die Werkzeugmaschine. Bei Messgeräten wird in einem "Substitutionsverfahren" das durch Kalibrierung bekannte Werkstück, das so genannte Masterteil, an Stelle des zu prüfenden Werkstückes gemessen, und die ermittelten Abweichungen zur Korrektur der später zu messenden Werkstücke herangezogen.

Zur Umsetzung des Substitutionsverfahrens ist es erforderlich, dass das Masterteil dem zu prüfenden Werkstück möglichst ähnlich ist.

Bei besonderen Genauigkeitsanforderungen werden geräteunabhängige Messsysteme eingesetzt. Die dabei gewonnenen Messwerte können gemäß der Offenlegungsschrift DE 196 30 205 A1 zur Positionsnachsteuerung bei Werkzeugmaschinen bzw. gemäß der Patentschrift DE 101 26 753 B4 zur Korrektur der vom Messgerät erzeugten Messwerte verwendet werden. Nachteilig hierbei ist, dass bei den meisten Messverfahren nur eine systematische Fehlerkomponente oder nur wenige systematische Fehlerkomponenten berücksichtigt werden.

In der Offenlegungsschrift DE 10 2004 041 469 A1 wird eine CNC-Fertigungsanordnung mit einer zentralen Datenbank beschrieben. Die beschriebene CNC-Fertigungsanordnung betrifft eine Anordnung und ein Verfahren zur computergesteuerten Vermessung von Werkstücken mit wenigstens einer Messmaschine sowie einer Vorrichtung zur Eingabe von Abmessungen der zu fertigenden Werkstücke als Parameter in die zentrale Datenbank. Mittels eines Rechners wird in Abhängigkeit von den aus der Datenbank einzulesenden Parametern die Messstrategie eines Messprogramms generiert und das generierte Messprogramm wird in ein maschinenabhängiges Steuerprogramm der Messmaschine umgesetzt. Die Daten für ein zu vermessendes Werkstück müssen daher nicht mehr in die Maschinensteuerung bzw. das Messprogramm der Messmaschine einprogrammiert werden, sondern können von der Messmaschine vor dem jeweiligen durchzuführenden Messvorgang direkt aus der zentralen Datenbank übernommen werden. Da die Messmaschinen von unterschiedlichen Herstellern stammen können, laufen auf den Steuerungsrechnern der Messmaschinen Konvertierungsprogramme, welche die Daten aus der Datenbank in ein zu der jeweiligen Messmaschine passendes Format konvertieren. Als nachteilig kann bei der beschriebenen CNS-Fertigungsanordnung angesehen werden, dass eine Korrektur von Positionierungsfehlern bei der Ausführung von mindestens einer Positionierungsfunktion bzw. mindestens eines Messvorgangs nicht vorgesehen ist.

Eine vollständige Berücksichtigung von Fehlerkomponenten einer translatorischen Verschiebebewegung in einem kartesischen Koordinatenmessgerät mit drei rechtwinklig zueinander stehenden Achsen ist in Wäldele, F.: "Genauigkeitssteigerungen von Koordinatenmessgeräten durch numerische Fehlerkorrektur", in CNC-Koordinatenmesstechnik, expert verlag 1988, ISBN 3-8169-0220-0, Seite 189 bis 204 beschrieben. Das beschriebene Verfahren basiert auf einem mathematischen Modell, welches das Zusammenwirken von 21 systematischen Fehlerkomponenten eines kartesischen Koordinatenmessgeräts mit 3 Achsen beschreibt. Dieses Modell ist Grundlage für eine numerische, prozessbegleitende Fehlerkorrektur. Es dient zur Berechnung der Geometrieabweichungen des kartesischen Koordinatenmessgeräts und ist unabhängig von der speziellen Bauart des Koordinatenmessgeräts. Es werden Messverfahren zur Ermittlung von 21 Fehlerkomponenten des Koordinatenmessgeräts mit 3 Achsen aufgeführt. Diese Fehlerkomponenten umfassen drei translatorische und drei rotatorische Abweichungen für jeden translatorisch bewegten Verschiebeschlitten sowie zusätzlich drei Rechtwinkligkeitsabweichungen. Zur Berechnung von Korrekturwerten aus den zuvor ermittelten 21 systematischen Fehlerkomponenten ist ein Programm in die Herstellersoftware des Koordinatenmessgeräts implementiert, das beim Einschalten des Koordinatenmessgeräts automatisch in den Rechnerspeicher des Steuerungsrechners eingelesen wird, so dass bei jeder Antastung die Korrekturwerte für die jeweilige Messposition ermittelt und mit den abgelesenen Messwerten verrechnet werden können.

Ebenso wie die Fehlerkomponenten der translatorischen Verschiebebewegung können gemäß VDI/VDE 2617-4: "Genauigkeit von Koordinatenmessgeräten, Kenngrößen und deren Prüfung, Drehtische auf Koordinatenmessgeräten", Beuth Verlag, 1989 auch die Fehlerkomponenten von Drehachsen korrigiert werden.

Die beschriebenen Korrekturverfahren können insbesondere in Positionierungssysteme implementiert werden, die eine entsprechende hardwaremäßige und softwaremäßige Systemarchitektur aufweisen, deren Struktur die Ausführung dieser Korrekturen ermöglichen. Als nachteilig kann angesehen werden, dass die Implementierung der beschriebenen Korrekturverfahren aufgrund des herstellerspezifischen Datenmanagements und der herstellerspezifischen Schnittstellen meist sehr aufwendig ist. In Positionierungssystemen, die keine entsprechende hardwaremäßige und softwaremäßige Systemarchitektur aufweisen, können die beschriebenen Korrekturverfahren nicht implementiert werden.

Aufgabe der Erfindung ist es, eine Vorrichtung und ein Verfahren zur Korrektur eines Positionierungssystems anzugeben, die unabhängig von der Ausführung des Positionierungssystems eine Optimierung der Positionierung ermöglichen.

Die Erfindung löst diese Aufgabe durch Bereitstellung einer Vorrichtung zur Korrektur eines Positionierungssystems mit den Merkmalen des Patentanspruchs 1 und durch ein korrespondierendes Verfahren mit den Merkmalen des Patentanspruchs 15.

Vorteilhafte Ausführungsformen und Weiterbildungen der Erfindung sind in den abhängigen Ansprüchen angegeben.

Erfindungsgemäß umfasst eine Vorrichtung zur Korrektur eines Positionierungssystems eine Konvertiervorrichtung, die mindestens ein Programm für mindestens eine Positionierungsfunktion durch Einarbeiten von Korrekturwerten in einen Steuercode des Programms modifiziert und als systemspezifisches Programm einem vorgegebenen Positionierungssystem zur Verfügung stellt. Hierbei können die Korrekturwerte, beispielsweise über geeignete Messmittel, speziell für das vorgegebene Positionierungssystem ermittelt werden. Dies ermöglicht in vorteilhafter Weise, dass unabhängig von der Ausführung des Positionierungssystems, das eine Systemsteuereinheit und einen Programmspeicher umfasst, eine Korrektur einer beliebigen Kinematik und deren Freiheitsgrade in kartesischen, zylindrischen oder kugelförmigen Koordinatensystemen sowie beliebigen Kombinationen hiervon durchgeführt werden kann, und somit die Positionierung mindestens eines zu positionierenden Elements durch das Positionierungssystem unter Verwendung der steuerungskonformen Korrekturwerte optimiert werden kann. Durch die erfindungsgemäße Vorrichtung können in vorteilhafter Weise herstellungs- und/oder verschleiß- und/oder temperatur- und/oder funktionsbedingte Fehler für verschiedene Arten von Positionierungssystemen korrigiert werden, wobei die Fehlerkorrektur immer individuell für ein vorgegebenes Positionierungssystem, entsprechend der Kinematik des Positionierungssystems, durchgeführt wird.

Die mindestens eine Positionierungsfunktion führt beispielsweise eine translatorische und/oder drehende Positionierungsbewegung mit dem mindestens einen zu positionierenden Element über mindestens eine translatorische Positionierungsachse und/oder über mindestens eine drehende Positionierungsachse innerhalb eines vorgegebenen Bezugssystems aus. Das mindestens eine zu positionierenden Element kann in Abhängigkeit von der Verwendung des Positionierungssystems als Werkzeug und/oder Werkstück und/oder Messwertaufnehmer und/oder Prüfling und/oder Bestückungseinheit und/oder zu bestückende Einheit und/oder Aufnehmerelement und/oder Ablageelement ausgeführt werden. So kann das Positionierungssystem beispielsweise zwei relativ zu einander zu positionierende Elemente, wie z.B. ein Werkzeug und ein Werkstück in einer Werkzeugmaschine, einen Messwertaufnehmer und einen Prüfling in einem Messsystem usw., relativ zueinander bewegen. Das Positionierungssystem verändert beispielsweise die Position eines ersten zu positionierenden Elements, z.B. des Werkzeugs bzw. des Messwertaufnehmers, und lässt die Position eines zweiten Elements, z.B. des Werkstücks bzw. des Prüflings, unverändert. Alternativ lässt das Positionierungssystem die Position des ersten zu positionierenden Elements, z.B. des Werkzeugs bzw. des Messwertaufnehmers, unverändert, verändert aber die Position des zweiten Elements, z.B. des Werkstücks bzw. des Prüflings. Bei einer weiteren alternativen Ausführungsform kann das Positionierungssystem sowohl die Position des ersten zu positionierenden Elements, z.B. des Werkzeugs bzw. des Messwertaufnehmers, als auch die Position des zweiten Elements, z.B. des Werkstücks bzw. des Prüflings, verändern.

In Ausgestaltung der erfindungsgemäßen Vorrichtung ermitteln die Messmittel Abweichungen, insbesondere systematische Abweichungen, der Systemgeometrie des vorgegebenen Positionierungssystems. Hierbei wird die Systemgeometrie von mindestens einer translatorischen und/oder drehenden Positionierungsachse bestimmt.

Die Messmittel ermitteln beispielsweise die Abweichungen für mindestens eine translatorische Positionierungsachse, wobei die Abweichungen translatorische Abweichungen in mindestens einer Bezugsrichtung und/oder rotatorische Abweichungen um mindestens eine Bezugsrichtung umfassen. Zudem ermitteln die Messmittel eine Rechtwinkligkeitsabweichung von jeweils zwei Positionierungsachsen zu einander, wenn die Systemgeometrie von mindestens zwei Positionierungsachsen bestimmt ist.

Zusätzlich ermitteln die Messmittel die Abweichungen für mindestens eine drehende Positionierungsachse. Hierbei können die Abweichungen jeweils eine Winkelabweichung, eine Radialabweichung, die durch Radialbewegungen der entsprechenden drehenden Positionierungsachse verursacht wird, eine Axialabweichung, die durch Axialbewegungen der entsprechenden drehenden Positionierungsachse verursacht wird, und/oder eine Taumelabweichung umfassen, die durch Taumelbewegungen der entsprechenden drehenden Positionierungsachse verursacht wird. Zudem können die Messmittel die Position der mindestens einen translatorischen Positionierungsachse und/oder der mindestens einen drehenden Positionierungsachse im Bezugssystem ermitteln.

In Abhängigkeit von der Ausführung des Positionierungssystems ergeben sich unterschiedliche Abweichungen, die zu Erzeugung der steuerungskonformen Korrekturwerte ermittelt werden. Zur Ermittlung der systematischen Abweichungen des Positionierungssystems umfassen die Messmittel beispielsweise ein Laserinterferometer mit speziellen Optionen, geometrische Normale, Kugelplatten und/oder spezielle Laser-Tracer.

Des Weiteren werden die Korrekturwerte von den Messmitteln aus den ermittelten Abweichungen der Systemgeometrie berechnet und der Konvertiervorrichtung als Korrekturmatrix zur Verfügung gestellt. Die Korrekturmatrix kann durch eine Kombination von kartesischen, zylindrischen oder kugelförmigen Koordinatensystemen an die bauartbedingte Kinematik des Positionierungssystems angepasst werden, so dass in vorteilhafter Weise eine individuelle Korrekturmatrix für das Positionierungssystem erstellt wird. Außerdem kann eine seitlich zu einer Positionierungsachse "auskragende" Offsetlänge eines Werkzeugs oder eines Messwertaufnehmers bzw. eines Messwerttasters bei der Ermittlung der Korrekturwerte berücksichtigt werden. Die Offsetlänge repräsentiert beispielsweise die Länge des mindestens einen zu positionierenden Elements, vorzugsweise die Länge des Werkzeugs und/oder des Messwertaufnehmers und/oder einer Bestückungseinheit und/oder eines Aufnehmerelements.

In Ausgestaltung der erfindungsgemäßen Vorrichtung kann als Bezugsystem beispielsweise ein kartesisches Koordinatensystem vorgegeben werden. Hierbei repräsentiert die mindestens eine Bezugsachse dann eine x-Achse und/oder eine y-Achse und/oder eine z-Achse des vorgegebenen kartesischen Koordinatensystems.

In weiterer Ausgestaltung der erfindungsgemäßen Vorrichtung kann die Konvertiervorrichtung auf verschiedene Datenformate eingestellt werden, wobei ein Datenformat in Abhängigkeit vom Datenformat der Systemsteuereinheit des vorgegebenen Positionierungssystems eingestellt werden kann. Dadurch kann die Konvertierungsvorrichtung in vorteilhafter Weise an verschiedene Datenformate der bereits erstellten, noch nicht korrigierten Programme und/oder des Positionierungssystems angepasst werden.

Die Konvertiervorrichtung stellt das erzeugte systemspezifische Programm dem vorgegebenen mechanisch positionierenden System beispielsweise durch eine direkte Kommunikationsverbindung über eine entsprechende Schnittstelle und/oder indirekt über eine mobile Speichereinheit zur Verfügung.

Das erfindungsgemäße Verfahren zur Erzeugung von Korrekturwerten für ein Positionierungssystem, das mindestens ein Programm für mindestens eine Positionierungsfunktion abarbeitet, ermittelt Abweichungen, insbesondere systematische Abweichungen, die beispielsweise von herstellungs- und/oder verschleiß- und/oder temperatur- und/oder funktionsbedingten Fehlern verursacht werden, der Systemgeometrie eines vorgegebenen Positionierungssystems, bestimmt aus den ermittelten Abweichungen der Systemgeometrie Korrekturwerte für das vorgegebene Positionierungssystem, modifiziert mindestens ein bereits erstelltes Programm für mindestens eine Positionierungsfunktion und erzeugt durch gezieltes Einarbeiten der Korrekturwerte des vorgegebenen Positionierungssystems in Steuercodes des mindestens einen bereits erstellten Programms mindestens ein systemspezifisches Programm. Das erzeugte mindestens eine systemspezifische Programm wird an das vorgegebene Positionierungssystem übertragen und beispielsweise dort abgespeichert. Zusätzlich oder alternativ kann das erzeugte systemspezifische Programm auf einem tragbaren Datenträger oder einem Netzlaufwerk gespeichert werden.

Die Erfindung kann in vorteilhafter Weise zur Erzeugung steuerungskonformer Korrekturwerte und zur Einarbeitung der erzeugten Korrekturwerte in Programme zur Steuerung von Positionierungssystemen eingesetzt werden, deren Systemsteuereinheiten keine Korrektur beliebiger Fehlerfreiheitsgrade in kartesischen, zylindrischen oder kugelförmigen Koordinatensystemen sowie beliebigen Kombinationen hiervon zulassen oder nicht vorsehen, ohne hardwaremäßige Veränderungen an den vorgegebenen Positionierungssystemen oder an den Systemsteuereinheiten vorzunehmen. Das mechanisch positionierende System ist beispielsweise Teil eines Messsystems und/oder einer Werkzeugmaschine und/oder eines Bestückungssystems und/oder eines Handhabungsgerätes und/oder eines Roboters.

Weitere vorteilhafte Ausgestaltungen und Weiterbildungen der Erfindung ergeben sich aus den restlichen Unteransprüchen.

Vorteilhafte, nachfolgend beschriebene Ausführungsformen der Erfindung sind in den Zeichnungen dargestellt.

Dabei zeigen:
- Fig. 1: ein Blockdiagramm eines Ausführungsbeispiels einer erfindungsgemäßen Korrekturvorrichtung, die Abweichungen einer Systemgeometrie eines Positionierungssystems korrigiert,
- Fig. 2 bis 4: jeweils ein schematisches Diagramm zur Darstellung von Fehlerparametern einer translatorischen Positionierungsachse,
- Fig. 5 bis 7: jeweils ein schematisches Diagramm zur Darstellung von Fehlerparametern einer drehenden Positionierungsachse, und
- Fig. 8: ein Flussdiagramm eines Ausführungsbeispiels des erfindungsgemäßen Korrekturverfahrens, das Abweichungen einer Systemgeometrie eines Positionierungssystems korrigiert.

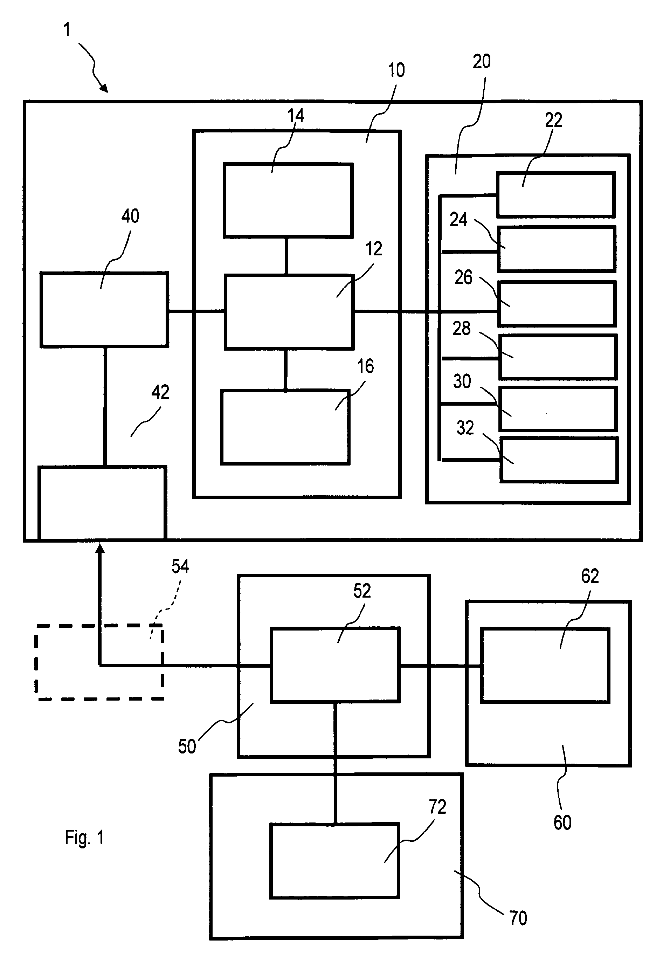

Fig. 1 zeigt ein Ausführungsbeispiel einer erfindungsgemäßen Vorrichtung zur Korrektur eines Positionierungssystems 1, das beispielsweise als Teil eines Messsystems und/oder einer Werkzeugmaschine und/oder eines Handhabungsgerätes und/oder eines Bestückungssystems und/oder eines Roboters aufgeführt werden kann. Wie aus Fig. 1 ersichtlich ist, umfasst das Positionierungssystem 1, eine Systemsteuereinheit 10, die eine Auswerte- und Steuereinheit 12, einen Systemdatenspeicher 14 und einen Arbeitsspeicher 16 aufweist, einen Programmspeicher 40, eine Schnittstelleneinheit 42, mehrere translatorische Positionierungsachsen 22, 24, 26, und mehrere drehende Positionierungsachsen 28, 30, 32, wobei die translatorischen Positionierungsachsen 22, 24, 26, und die drehenden Positionierungsachsen 28, 30, 32 gemeinsam eine Systemgeometrie 20 des Positionierungssystems 1 bestimmen. Als Bezugssystem verwendet das dargestellte Ausführungsbeispiel des Positionierungssystems 1 ein kartesisches Koordinatensystem mit drei zu einander senkrecht verlaufenden Bezugsachsen x, y, z.

Im Programmspeicher 40 ist mindestens ein Programm für mindestens eine Positionierungsfunktion gespeichert, wobei die Auswerte- und Steuereinheit 12 ein gespeichertes Programm aus dem Programmspeicher 40 zur Abarbeitung in den Arbeitsspeicher 16 lädt. Im Systemdatenspeicher 14 sind systemspezifische Informationen gespeichert, die von der Auswerte- und Steuereinheit 12 bei der Abarbeitung des in den Arbeitsspeicher 16 geladenen Programms angefordert werden. Bei den im Programmspeicher 40 gespeicherten Programmen handelt es sich um spezifische Programme 52, die von der Konvertiervorrichtung 50 durch Einarbeiten von Korrekturwerten 62 in Steuercodes von bereits mit einer Programmiervorrichtung 70 erstellten Programmen 72 erzeugt werden und dem Positionierungssystem 1 zur Verfügung gestellt werden. Die Korrekturwerte 62 werden von entsprechenden Messmitteln 60 speziell für das vorgegebene Positionierungssystem 1 ermittelt. Zur Ermittlung der Korrekturwerte 62 erfassen die Messmittel 60 Abweichungen, insbesondere systematischen Abweichungen, der Systemgeometrie 20 des vorgegebenen Positionierungssystems 1, wobei die Messmittel 60 zur Erfassung der Abweichungen beispielsweise ein Laserinterferometer mit speziellen Optionen, Stufenendmasse, geometrische Normale, Kugelplatten und/oder spezielle Laser-Tracer usw. umfassen.

Im dargestellten Ausführungsbeispiel des Positionierungssystems wird die Systemgeometrie 20, wie oben bereits ausgeführt ist, durch die drei translatorischen Positionierungsachsen 22, 24, 26 und die drei drehenden Positionierungsachsen 28, 30, 32 bestimmt. Die mindestens eine von der Auswerte- und Steuereinheit 12 mit dem Positionierungssystem 1 abgearbeitete Positionierungsfunktion führt durch eine entsprechende Ansteuerung der drei translatorischen Positionierungsachsen 22, 24, 26 und/oder der drei drehende Positionierungsachsen 28, 30, 32 innerhalb des vorgegebenen Bezugssystems eine translatorische und/oder drehende Positionierungsbewegung mit mindestens einem zu positionierenden Element aus. Das mindestens eine zu positionierenden Element ist in Abhängigkeit von der Anwendung des Positionierungssystems 1 als Werkzeug und/oder Werkstück und/oder Messwertaufnehmer und/oder Prüfling und/oder Bestückungseinheit und/oder zu bestückende Einheit und/oder Aufnehmerelement und/oder Ablegerelement ausgeführt.

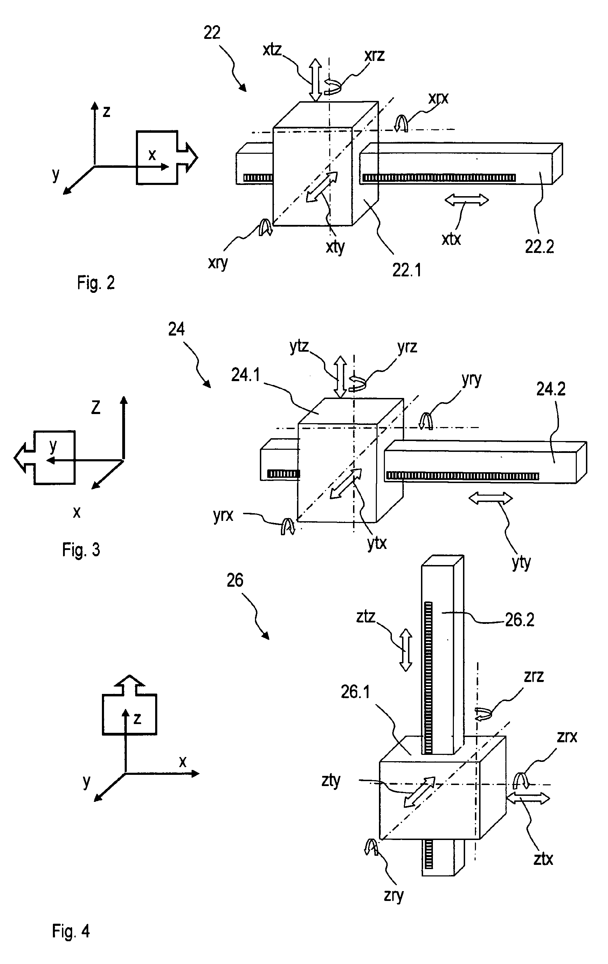

Wie aus Fig. 2 bis 4 ersichtlich ist, umfasst im dargestellten Ausführungsbeispiel eine erste translatorische Positionierungsachse 22 einen angetriebenen ersten Schlitten 22.1, der durch eine erste Führungsschiene 22.2 zur Ausführung einer Translation in eine positive oder negative x-Richtung geführt ist. Eine zweite translatorische Positionierungsachse 24 umfasst einen angetriebenen zweiten Schlitten 24.1, der durch eine zweite Führungsschiene 24.2 zur Ausführung einer Translation in eine positive oder negative y-Richtung geführt ist. Eine dritte translatorische Positionierungsachse 26 umfasst einen angetriebenen dritten Schlitten 26.1, der durch eine dritte Führungsschiene 26.2 zur Ausführung einer Translation in eine positive oder negative z-Richtung geführt ist.

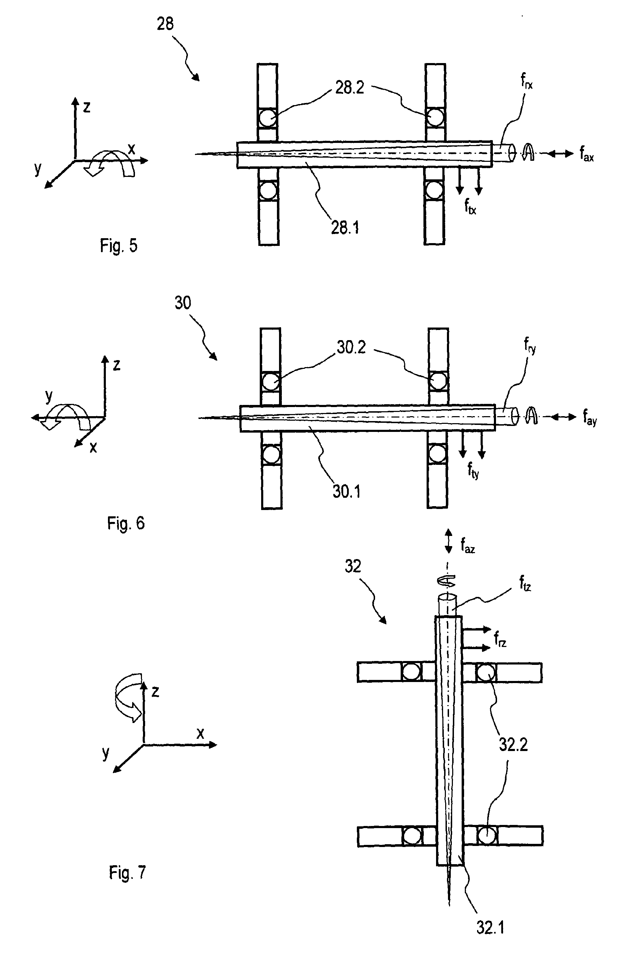

Wie aus Fig. 5 bis 7 ersichtlich ist, umfasst im dargestellten Ausführungsbeispiel eine erste drehende Positionierungsachse 28 eine angetriebene erste Drehwelle 28.1, die bei der Ausführung einer Drehbewegung um eine erste Bezugsachse x durch eine entsprechende erste Lagerung 28.2 geführt ist. Eine zweite drehende Positionierungsachse 30 umfasst eine angetriebene zweite Drehwelle 30.1, die bei der Ausführung einer Drehbewegung um eine zweite Bezugsachse y durch eine entsprechende zweite Lagerung 30.2 geführt ist. Eine dritte drehende Positionierungsachse 32 umfasst eine angetriebene dritte Drehwelle 32.1, die bei der Ausführung einer Drehbewegung um eine dritte Bezugsachse y durch eine entsprechende dritte Lagerung 32.2 geführt ist.

Zur Ermittlung der Korrekturwerte 62 für das Positionierungssystem 1 gemäß Fig. 1 erfassen die Messmittel 60 die Abweichungen bzw. Fehlerparameter für die drei translatorischen Positionierungsachsen 22, 24, 26, wobei die Abweichungen der translatorischen Positionierungsachsen 22, 24, 26 jeweils translatorische Abweichungen bzw. Fehlerparameter xtx, xty, xtz, ytx, yty, ytz, ztx, zty, ztz in die drei Bezugsrichtungen x, y, z und/oder jeweils rotatorische Abweichungen bzw. Fehlerparameter xrx, xry, xrz, yrx, yry, yrz, zrx, zry, zrz um die drei Bezugsichtungen x, y, z umfassen. Wie aus Fig. 2 bis 4 ersichtlich ist, ergeben sich für das kartesische Bezugskoordinatensystem für jede der drei translatorischen Positionierungsachsen 22, 24, 26 jeweils sechs Abweichungen bzw. Fehlerparameter, die in Tabelle 1 angegeben sind.

**Tabelle 1**

| | |
|---|---|
| xtx | Translatorische Abweichung der ersten Positionierungsachse in x-Richtung |
| xty | Translatorische Abweichung der ersten Positionierungsachse in y-Richtung |
| xtz | Translatorische Abweichung der ersten Positionierungsachse in z-Richtung |
| xrx | Rotatorische Abweichung der ersten Positionierungsachse um die x-Achse |
| xry | Rotatorische Abweichung der ersten Positionierungsachse um die y-Achse |
| xrz | Rotatorische Abweichung der ersten Positionierungsachse um die z-Achse |
| ytx | Translatorische Abweichung der zweiten Positionierungsachse in x-Richtung |
| yty | Translatorische Abweichung der zweiten Positionierungsachse in y-Richtung |
| ytz | Translatorische Abweichung der zweiten Positionierungsachse in z-Richtung |
| yrx | Rotatorische Abweichung der zweiten Positionierungsachse um die x-Achse |
| yry | Rotatorische Abweichung der zweiten Positionierungsachse um die y-Achse |
| yrz | Rotatorische Abweichung der zweiten Positionierungsachse um die z-Achse |
| ztx | Translatorische Abweichung der dritten Positionierungsachse in x-Richtung |
| zty | Translatorische Abweichung der dritten Positionierungsachse in y-Richtung |
| ztz | Translatorische Abweichung der dritten Positionierungsachse in z-Richtung |
| zrx | Rotatorische Abweichung der dritten Positionierungsachse um die x-Achse |
| zry | Rotatorische Abweichung der dritten Positionierungsachse um die y-Achse |
| zrz | Rotatorische Abweichung der dritten Positionierungsachse um die z-Achse |

Zusätzlich zu diesen Fehlerparametern gemäß Tabelle 1 können bei dem Positionierungssystem 1 mit drei translatorischen Positionierungsachsen 22, 24, 26 in einer "Portal-Bauart" drei in Tabelle 2 dargestellte Rechtwinkligkeitsabweichungen von jeweils zwei der drei translatorischen Positionierungsachsen 22, 24, 26 zueinander auftreten, so dass sich insgesamt 21 Fehlerparameter ergeben können.

**Tabelle 2**

| | |
|---|---|
| xwy | Rechtwinkligkeitsabweichung der ersten Positionierungsachse zur zweiten Positionierungsachse |
| xwz | Rechtwinkligkeitsabweichung der ersten Positionierungsachse zur dritten Positionierungsachse |
| ywz | Rechtwinkligkeitsabweichung der zweiten Positionierungsachse zur dritten Positionierungsachse |

Zusätzlich zu diesen Fehlerparametern gemäß Tabelle 1 und 2 können bei einem Positionierungssystem 1 mit drei translatorischen Positionierungsachsen 22, 24, 26 in einer "Horizontalarm-Bauart" drei weitere, in Tabelle 3 dargestellte "elastische" Fehler auftreten, die durch eine horizontal auskragende Positionierungsachse, z.B. der zweiten Positionierungsachse, des Systemständers verursacht werden, so dass sich insgesamt 24 Fehlerparameter ergeben können.

**Tabelle 3**

| | |
|---|---|
| yty2 | Translatorische Abweichung der zweiten Positionierungsachse in y-Richtung durch die Elastizität des Ständers |
| zty2 | Translatorische Abweichung der dritten Positionierungsachse in y-Richtung durch die Elastizität des Ständers |
| zrx2 | Rotatorische Abweichung der dritten Positionierungsachse um die x-Achse durch die Elastizität des Ständers |

Zur Ermittlung der Korrekturwerte 62 für das Positionierungssystem 1 gemäß Fig. 1 erfassen die Messmittel 60 die Abweichungen bzw. Fehlerparameter für die drei drehenden Positionierungsachsen 28, 30, 32, wobei die Abweichungen der drei drehenden Positionierungsachsen 28, 30, 32 jeweils eine Radialabweichung frx, fry, frz, eine Axialabweichung fax, fay, faz und/oder eine Taumelabweichung ftx, fty, ftz umfassen. Wie aus Fig. 5 bis 7 ersichtlich ist, ergeben sich für das kartesische Bezugskoordinatensystem für jede der drei drehenden Positionierungsachsen 28, 30, 32 jeweils drei Fehlerparameter, die in Tabelle 4 beispielhaft ohne Bezug auf eine bestimmte drehende Positionierungsachse angegeben sind. Für eine Korrektur der Fehlerparameter von drehenden Positionierungsachsen 28, 30, 32 ist zusätzlich eine Ermittlung der Position der drehenden Positionsierungsachsen 28, 30, 32 innerhalb eines Bezugskoordinatensystems erforderlich. Die Positionen der jeweiligen drehenden Positionierungsachse 28, 30 oder 32 in einem kartesischen Bezugskoordinatensystem, die auch von den Messmitteln 60 erfasst werden, können z. B. durch zwei Koordinaten und zwei projizierte Winkel eindeutig beschrieben werden. Für jede drehende Positionierungsachse 28, 30, 32 können sich die Fehlerparameter ergeben, die in Tabelle 4 angegeben werden. Zusätzlich kann eine in Fig. 5 bis 7 nicht dargestellte Winkelmessabweichung Pw auftreten, wenn die drehenden Positionierungsachsen 28, 30, 32 jeweils mit einem Winkelmeßsystem ausgerüstet sind.

**Tabelle 4**

| | |
|---|---|
| Pw | Winkelpositionsabweichung der drehenden Positionierungsachse |
| fₐ | Abweichung durch Axialbewegung der drehenden Positionierungsachse |
| fᵣ | Abweichung durch Radialbewegung der drehenden Positionierungsachse |
| fₜ | Abweichung durch Taumelbewegung der drehenden Positionierungsachse |

Bei der Ermittlung der Abweichungen können die Messmittel 60 bei der Aufnahme der Abweichungen Korrekturroutinen und/oder Korrekturwerte berücksichtigen, die im Systemspeicher 14 abgelegt sind. Bei Bedarf können die im Systemspeicher 14 gespeicherten Korrekturroutinen und/oder Korrekturwerte vollständig oder teilweise deaktiviert werden bevor die Messmittel die Abweichungen ermitteln. Entsprechend dem Aktivierungszustand der im Systemspeicher 14 gespeicherten Korrekturroutinen und/oder Korrekturwerte bei der Ermittlung der Abweichungen, sind die im Systemspeicher 14 gespeicherten Korrekturroutinen und/oder Korrekturwerte bei der Ausführung des modifizierten systemspezifischen Programms 52 aktiviert oder deaktiviert. Dadurch wird in vorteilhafter Weise vermieden, dass unter ungünstigen Bedingungen eine doppelte Korrektur ausgeführt wird.

Am Beispiel einer Positioniereinrichtung in Portalbauart mit drei translatorischen Positionierungsachsen 22, 24, 26 ermitteln die Messmittel 60, wie oben bereits ausgeführt ist, für jede der translatorischen Positionierungsachsen 22, 24, 26 die zugehörigen translatorischen und rotatorischen Abweichungen xtx, xty, xtz, ytx, yty, ytz, ztx, zty, ztz, xrx, xry, xrz, yrx, yry, yrz, zrx, zry, zrz gemäß Tabelle 1. Die jeweiligen Lageabweichungen einer der translatorischen Positionierungsachse 22, 24, 26 lassen sich durch drei achsparallele Verschiebungen eines Achspunktes und durch drei Drehwinkel beschreiben. Zusätzlich ergeben sich die drei Rechtwinkligkeitsabweichungen xwy, xwz, ywz gemäß Tabelle 2 der translatorischen Positionierungsachsen 22, 24, 26 zueinander. Somit können in diesem Ausführungsbeispiel die Abweichungen für alle Freiheitsgrade der Systemgeometrie 20 als "Vollfehleraufnahme" ermittelt werden. Anschließend berechnen die Messmittel 60 basierend auf den erfassten Abweichungen der Systemgeometrie 20 die Korrekturwerte 62 für das vorgegebene Positionierungssystem 1 und stellen die berechneten Korrekturwerte 62 der Konvertiervorrichtung 50 als Korrekturmatrix zur Verfügung, die in Tabelle 5 dargestellt ist.

Tabelle 5 zeigt beispielsweise Abweichungen bzw. Korrekturen für ein kartesisches Koordinatenmessgerät in Portal-Bauart mit 3 Achsen. Wie aus Tabelle 5 ersichtlich ist, werden bei der Ermittlung der Korrekturwerte Offsetlängen für "auskragende" Werkzeuge bzw. Taster berücksichtigt, wobei x_{T} eine Offsetlänge in x-Richtung bezeichnet, y_{T} bezeichnet eine Offsetlänge in y-Richtung und z_{T} bezeichnet eine Offsetlänge in z-Richtung.

**Tabelle 5**

| Achse | Abweichung (Korrektur) | Korrekturfaktor | | |
|---|---|---|---|---|
| | | X_{R} | Y_{R} | Z_{R} |
| | ywz | | -z | |
| | xwz | -z | | |
| | xwy | -y | | |
| Y | ytx | 1 | | |
| | yty | | 1 | |
| | ytz | | | 1 |
| | yrx | | -z-z_{T} | y_{T} |
| | yry | z+z_{T} | | |
| | yrz | -y_{T} | x+x_{T} | -x-x_{T} |
| X | xtx | 1 | | |
| | xty | | 1 | |
| | xtz | | | 1 |
| | xrx | | -z-z_{T} | y_{T} |
| | xry | z+z_{T} | | |
| | xrz | -y_{T} | x_{T} | |
| Z | ztx | 1 | | |
| | zty | | 1 | |
| | ztz | | | 1 |
| | zrx | | -z_{T} | y_{T} |
| | zry | z_{T} | | |
| | zrz | -y_{T} | x_{T} | |

x, y, z sind die Koordinaten des Systems, X repräsentiert die erste translatorische Positionierungsachse 22, Y repräsentiert die zweite translatorische Positionierungsachse 24, Z repräsentiert die dritte translatorische Positionierungsachse 26, x_{T}, y_{T} und z_{T} sind die Offsetlängen.

Wie aus Tabelle 5 ersichtlich ist, ergibt sich beispielsweise für eine Korrektur Ky des y-Wertes auf Grund des rotatorischen Fehlers yrx: Ky = yrx*(-z - z_{T}).

Bei einer alternativen nicht dargestellten Ausführungsform der Erfindung berechnet die Konvertiervorrichtung anstelle der Messmittel basierend auf den von den Messmitteln gemessenen Abweichungen die Korrekturwerte.

Zudem kann die Konvertiervorrichtung 50 auf verschiedene Datenformate eingestellt werden, so dass eine optimale Anpassung an ein Datenformat der Systemsteuereinheit 10 des vorgegebenen Positionierungssystems 1 und/oder an das Datenformat eines bereits erstellten Programms 72 vorgenommen werden kann, in das die Korrekturwerte 62 eingearbeitet werden sollen. Zur Erzeugung des systemspezifischen Programms 52 umfasst die Konvertiervorrichtung 50 mindestens eine nicht dargestellte Speichereinheit, in der die Korrekturwerte 62 und das bereits erstellte Programm temporär während der Erzeugung des systemspezifischen Programms 52 gespeichert sind. Das erzeugte systemspezifische Programm 52 wird entweder direkt über die Systemschnittstelle 42 an den Programmspeicher 40 übertragen oder in einer korrespondierenden Seichereinheit 54 gespeichert. Des Weiteren umfasst die Konvertierungsvorrichtung 50 eine Prozessoreinheit, die das bereits bestehende Programm 72 liest und im Programm enthaltene Positions- und/oder Bewegungsangaben unter Verwendung der Korrekturwerte 62 korrigiert und die korrigierten Positions- und/oder Bewegungsangaben in das systemspezifische Programm 52 einarbeitet. Die Kommunikationsverbindung kann beispielsweise über entsprechende elektrische Verbindungsleitungen, wie einem Datenbus, oder über einen drahtlosen Übertragungskanal im Infrarotfrequenzbereich oder im Hochfrequenzbereich erfolgen. Eine alternative Übertragungsmöglichkeit wird durch die gestrichelt dargestellte mobile Speichereinheit 54 angedeutet. Bei dieser alternativen Ausführungsform speichert die Konvertiervorrichtung 50 das erzeugte systemspezifische Programm 52 in der mobilen Speichereinheit 54, die als beliebige Schreib/Lesespeichereinheit ausgeführt sein kann, beispielsweise als Speicherstick, Diskette, CD, DVD usw. Alternativ kann die Speichereinheit 54 als stationäre Festplatte und/oder Netzlaufwerk ausgeführt werden. Die Speichereinheit 54 wird mit der Systemschnittstelle 42 verbunden, die in diesem Fall eine entsprechende Lesevorrichtung zum Auslesen der Speichereinheit 54 umfasst und die ausgelesenen Daten an den Programmspeicher 40 überträgt.

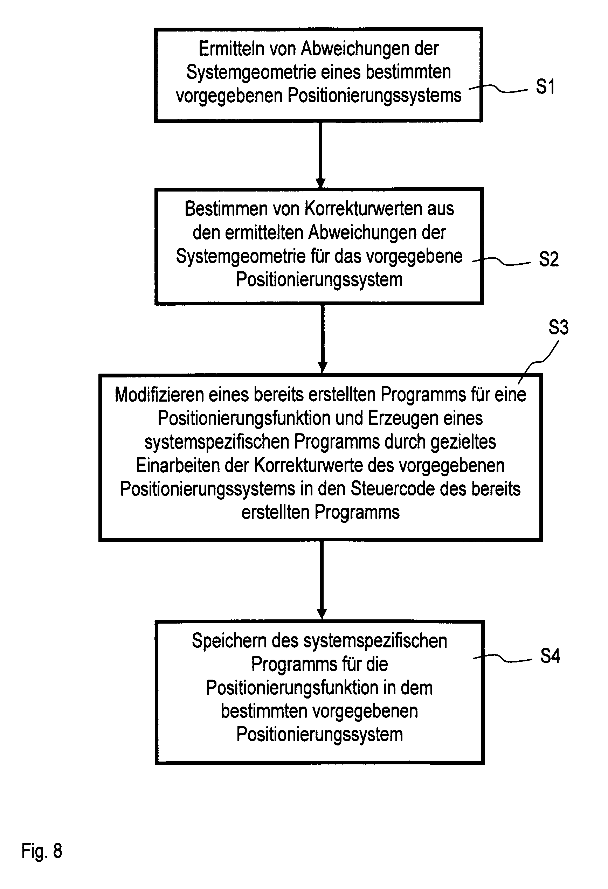

Wie aus Fig. 8 ersichtlich ist, ermittelt das erfindungsgemäße Korrekturverfahren für ein Positionierungssystem 1 in einem ersten Schritt S1 die Abweichungen, insbesondere die systematischen Abweichungen, der Systemgeometrie 20 des vorgegebenen Positionierungssystems 1. In einem zweiten Schritt S2 werden aus den ermittelten Abweichungen der Systemgeometrie 20 die Korrekturwerte 62 für das vorgegebene Positionierungssystem 1 bestimmt. In einem dritten Schritt S3 wird ein bereits erstelltes Programm 72 für eine Positionierungsfunktion modifiziert und ein zugehöriges systemspezifischen Programm 52 durch gezieltes Einarbeiten der Korrekturwerte 62 des vorgegebenen Positionierungssystems 1 in den Steuercodes des bereits erstellten Programms 72 erzeugt. Abschließend wird in einem vierten Schritt das erzeugte systemspezifische Programm 52 im Programmspeicher 40 des vorgegebenen Positionierungssystems 1 gespeichert. Der dritte und vierte Schritt S3 und S4 können für alle bereits erstellten Programme für das vorgegebene Positionierungssystem 1 wiederholt werden.

Das erfindungsgemäße Korrekturverfahren für ein Positionierungssystem 1 verbessert durch die gezielte Veränderung des Programmcodes mit zuvor ermittelten Korrekturwerten 62 in vorteilhafter Weise die Genauigkeit der Systemgeometrie 20, der translatorischen Positionierungsachsen 22, 24, 26 und/oder der drehenden Positionierungsachsen 28, 30, 32 und deren Winkellage zueinander.

Das modifizierte systemspezifische Programm 52 entspricht der Syntax des Standardsteuercodes für die entsprechende Systemsteuereinheit 10. Das erfindungsgemäße Korrekturverfahren ist durch die Veränderung des Programmsteuercodes unabhängig vom Typ der Systemsteuereinheit 10 und der Softwareversion des Programmsteuercodes und somit universell einsetzbar. Das erfindungsgemäße Verfahren korrigiert immer das gesamte Programm 72. Das systemspezifische Programm 52 ist nach der Konvertierung spezifisch an die Systemgeometrie 20 des jeweiligen Positionierungssystems 1 angepasst, für welche die Korrekturwerte 62 ermittelt wurden.

Die mit der Erfindung erzielten Vorteile bestehen insbesondere darin, dass auf der Grundlage einer Korrekturmatrix, beispielsweise nach Tabelle 5, die Steuerdaten für ein Positionierungssystem off-line korrigiert werden können, ohne dass man in die jeweilige Software des Systems, z.B. einer Werkzeugmaschine, eingreifen muss. Da mit der Korrekturmatrix ein "Fingerabdruck der Fehler" des Positionierungssystems vorliegt, der über einen längeren Zeitraum seine Gültigkeit hat, können über diesen Zeitraum die Steuerdaten beliebiger Positionierungsfunktionen beliebig häufig korrigiert werden.

## Patentansprüche

1. Vorrichtung zur Korrektur eines Positionierungssystems, das eine Systemsteuereinheit (10) und einen Programmspeicher (40) umfasst, in dem mindestens ein Programm (72) für mindestens eine Positionierungsfunktion speicherbar ist, wobei die Systemsteuereinheit (10) über eine Auswerte- und Steuereinheit (12) das mindestens eine gespeicherte Programm (72) zur Abarbeitung in einen Arbeitsspeicher (16) lädt,
**gekennzeichnet durch**
eine Konvertiervorrichtung (50), die ein für mindestens eine Positionierungsfunktion erstelltes Programm (72) **durch** Einarbeiten von Korrekturwerten (62) in einen Steuercode des Programms (72) modifiziert und als systemspezifisches Programm (52) einem vorgegebenen Positionierungssystem (1) zur Verfügung stellt, wobei die Korrekturwerte (62) speziell für das vorgegebene Positionierungssystem (1) ermittelt sind.

2. Vorrichtung nach Anspruch 1,
**dadurch gekennzeichnet,**
**dass** die mindestens eine Positionierungsfunktion eine translatorische und/oder drehende Positionierungsbewegung mit mindestens einem zu positionierenden Element über mindestens eine translatorische Positionierungsachse (22, 24, 26) und/oder mindestens eine drehende Positionierungsachse (28, 30, 32) innerhalb eines vorgegebenen Bezugssystems ausführt.

3. Vorrichtung nach Anspruch 2,
**dadurch gekennzeichnet,**
**dass** das mindestens eine zu positionierenden Element als Werkzeug und/oder Werkstück und/oder Messwertaufnehmer und/oder Prüfling und/oder Bestückungseinheit und/oder zu bestückende Einheit und/oder Aufnehmerelement und/oder Ablageelement ausgeführt ist.

4. Vorrichtung nach einem der Ansprüche 1 bis 3,
**dadurch gekennzeichnet,**
**dass** Messmittel (60) Abweichungen, insbesondere systematische Abweichungen, der Systemgeometrie (20) des vorgegebenen Positionierungssystems (1) ermitteln, wobei mindestens eine translatorische und/oder drehende Positionierungsachse (22, 24, 26, 28, 30, 32) die Systemgeometrie (20) bestimmt.

5. Vorrichtung nach Anspruch 4,
**dadurch gekennzeichnet,**
**dass** die Messmittel (60) die Abweichungen für mindestens eine translatorische Positionierungsachse (22, 24, 26) ermitteln, wobei die Abweichungen translatorische Abweichungen (xtx, xty, xtz, ytx, yty, ytz, ztx, zty, ztz) in mindestens eine Bezugsrichtung (x, y, z) und/oder rotatorische Abweichungen (xrx, xry, xrz, yrx, yry, yrz, zrx, zry, zrz) um mindestens eine Bezugsichtung (x, y, z) umfassen.

6. Vorrichtung nach Anspruch 4 oder 5,
**dadurch gekennzeichnet,**
**dass** die Messmittel (60) eine Rechtwinkligkeitsabweichung (xwy, xwz, ywz) von jeweils zwei Positionierungsachsen (22, 24, 26) zu einander ermitteln, wenn die Systemgeometrie (20) von mindestens zwei Positionierungsachsen (22, 24, 26) bestimmt ist.

7. Vorrichtung nach einem der Ansprüche 4 bis 6,
**dadurch gekennzeichnet,**
**dass** die Messmittel (60) die Abweichungen für mindestens eine drehende Positionierungsachse (28, 30, 32) ermitteln, wobei die systematischen Abweichungen jeweils eine Winkelabweichung, eine Radialabweichung (fᵣₓ, f_{ry}, f_{rz}), eine Axialabweichung (fₐₓ, f_{ay}, f_{az}) und/oder eine Taumelabweichung (fₜₓ, f_{ty}, f_{tz}) umfassen.

8. Vorrichtung nach einem der Ansprüche 4 bis 7,
**dadurch gekennzeichnet,**
**dass** die Messmittel (60) die Position der mindestens einen translatorischen Positionierungsachse (22, 24, 26) und/oder der mindestens einen drehenden Positionierungsachse (28, 30, 32) im Bezugssystem ermitteln.

9. Vorrichtung nach einem der Ansprüche 4 bis 8,
**dadurch gekennzeichnet,**
**dass** die Messmittel (60) die Korrekturwerte (62) aus den ermittelten Abweichungen der Systemgeometrie (20) des vorgegebenen Positionierungssystems (1) berechnen und der Konvertiervorrichtung (50) als Korrekturmatrix zur Verfügung stellen.

10. Vorrichtung nach einem der Ansprüche 4 bis 9,
**dadurch gekennzeichnet,**
**dass** die Messmittel (60) eine vorhandene Offsetlänge in mindestens eine Bezugsrichtung (x, y, z) bei der Ermittlung der Korrekturwerte (62) berücksichtigen.

11. Vorrichtung nach einem der Ansprüche 1 bis 10,
**dadurch gekennzeichnet,**
**dass** das vorgegebene Bezugsystem ein kartesisches Koordinatensystem ist, wobei die mindestens eine Bezugsachse eine x-Achse (x) und/oder eine y-Achse (y) und/oder eine z-Achse (z) des kartesischen Koordinatensystems repräsentiert.

12. Vorrichtung nach einem der Ansprüche 1 bis 11,
**dadurch gekennzeichnet,**
**dass** die Konvertiervorrichtung (50) auf verschiedene Datenformate einstellbar ist, wobei ein Datenformat in Abhängigkeit vom Datenformat der Systemsteuereinheit (10) des vorgegebenen Positionierungssystems (1) und/oder vom Datenformat des bereits erstellten Programms (72) eingestellt ist.

13. Vorrichtung nach einem der Ansprüche 1 bis 12,
**dadurch gekennzeichnet,**
**dass** die Konvertiervorrichtung (50) das systemspezifische Programm (52) des vorgegebenen Positionierungssystems (1) durch eine direkte Kommunikationsverbindung über eine entsprechende Schnittstelle (42) und/oder indirekt über ein mobile Speichereinheit (54) zur Verfügung stellt.

14. Vorrichtung nach einem der Ansprüche 1 bis 13,
**dadurch gekennzeichnet,**
**dass** das vorgegebene Positionierungssystem (1) Teil eines Messsystems und/oder einer Werkzeugmaschine und/oder eines Bestückungssystems und/oder eines Handhabungssystems und/oder eines Roboters ist.

15. Verfahren zur Korrektur eines Positionierungssystems, das mindestens ein Programm für mindestens eine Positionsfunktion abarbeitet,
**gekennzeichnet durch**,
die Schritte:
- Ermitteln von Abweichungen, insbesondere von systematischen Abweichungen, der Systemgeometrie (20) eines vorgegebenen Positionierungssystems (1),
- Bestimmen von Korrekturwerten (62) aus den ermittelten Abweichungen der Systemgeometrie (20) für das vorgegebene Positionierungssystem (1),
- Modifizieren mindestens eines bereits erstellten Programms (72) für mindestens eine Positionierungsfunktion und Erzeugen mindestens eines systemspezifischen Programms (52) **durch** gezieltes Einarbeiten der Korrekturwerte (62) des vorgegebenen Positionierungssystems (1) in einen Steuercode des mindestens einen bereits erstellten Programms (72), und
- Speichern des mindestens einen systemspezifischen Programms (52) in das vorgegebene Positionierungssystem (1) .

16. Verfahren nach Anspruch 15,
**dadurch gekennzeichnet,**
**dass** die mindestens eine Positionierungsfunktion eine translatorische und/oder drehende Positionierungsbewegung mit mindestens einem zu positionierenden Element über mindestens eine translatorische Positionierungsachse (22, 24, 26) und/oder mindestens eine drehende Positionierungsachse (28, 30, 32) innerhalb eines vorgegebenen Bezugssystems ausführt.

17. Verfahren nach Anspruch 15 oder 16,
**dadurch gekennzeichnet,**
**dass** die Abweichungen für mindestens eine translatorische Positionierungsachse (22, 24, 26) ermittelt werden, wobei die Abweichungen translatorische Abweichungen (xtx, xty, xtz, ytx, yty, ytz, ztx, zty, ztz) in mindestens eine Bezugsrichtung (x, y, z) und/oder rotatorische Abweichungen (xrx, xry, xrz, yrx, yry, yrz, zrx, zry, zrz) um mindestens eine Bezugsrichtung (x, y, z) umfassen.

18. Verfahren nach einem der Ansprüche 15 bis 17,
**dadurch gekennzeichnet,**
**dass** die Abweichungen mindestens eine Rechtwinkligkeitsabweichung zwischen zwei translatorischen Positionierungsachsen (22, 24, 26) umfassen, wenn die Systemgeometrie (20) von mindestens zwei Positionierungsachsen (22, 24, 26) bestimmt wird.

19. Verfahren nach einem der Ansprüche 16 bis 18,
**dadurch gekennzeichnet,**
**dass** die Abweichungen für mindestens eine drehende Positionierungsachse (28, 30, 32) ermittelt werden, wobei die systematischen Abweichungen jeweils eine Winkelabweichung, eine Radialabweichung (fᵣₓ, f_{ry}, f_{rz}), eine Axialabweichung (fₐₓ, f_{ay}, f_{az}) und/oder eine Taumelabweichung (fₜₓ, f_{ty}, f_{tz}) umfassen.

20. Verfahren nach einem der Ansprüche 16 bis 19,
**dadurch gekennzeichnet,**
**dass** die Korrekturwerte als Korrekturmatrix zur Verfügung gestellt werden.
